# FASCICULE DE BREVET EUROPEEN

(11) **EP 0 826 309 B1**
(45) Date de publication et mention de la délivrance du brevet: **13.12.2000**
(21) Numéro de dépôt: 97401976.2
(22) Date de dépôt: 22.08.1997
(51) Int. Cl.: A23K 1/00

(54) **Procédé d'alimentation équilibré de bétail**
Verfahren zur ausgeglichenen Fütterung von Vieh
Balanced cattle feeding process

(30) Priorité: 26.08.1996 FR 9610425
(43) Date de publication de la demande: 04.03.1998
(73) Titulaire: Mouillet, Michel, 63400 Chamalieres (FR)
(72) Inventeur: Mouillet, Michel, 63400 Chamalieres (FR)
(74) Mandataire: Phélip, Bruno

(56) Documents cités:
- EP-A- 0 037 376
- WO-A-93/22936
- WO-A-95/04467
- US-A- 4 746 531
- DATABASE WPI Section Ch, Week 9639 Derwent Publications Ltd., London, GB; Class D13, AN 96-391423 XP002032647 & RU 2 050 140 C (KORMA RES PRODN ASSOC) , 20 décembre 1995
- DATABASE WPI Section Ch, Week 8635 Derwent Publications Ltd., London, GB; Class C03, AN 86-231601 XP002032648 & SU 1 207 456 A (BELO LIVESTOCK RES) , 30 janvier 1986
- DATABASE WPI Section Ch, Week 8450 Derwent Publications Ltd., London, GB; Class C03, AN 84-311667 XP002032649 & SU 1 091 901 A (FARM ANIMALS PHYSIO) , 15 mai 1984
- DATABASE WPI Section Ch, Derwent Publications Ltd., London, GB; Class C00, AN 67-00276H XP002032650 & ZA 6 604 159 A (SOUTH AFRICAN COAL OIL & GAS CORP LT)

## Description

La présente invention, qui résulte des recherches de Monsieur Michel MOUILLET, concerne l'alimentation du bétail, en général et plus particulièrement, des veaux destinés à la boucherie.

Il est connu que, durant sa période de développement, un animal a besoin de trouver dans sa ration alimentaire, les éléments, non seulement suffisants pour son entretien en bonne santé (dit: « besoins d'entretien »), à poids pratiquement constant, en étant pratiquement au repos et dans des conditions normales de température, mais encore indispensables pour assurer sa croissance (dit: « besoins de croissance »), tout particulièrement l'augmentation de son poids (dit « poids vif »).

Ainsi, le brevet US 4.746.531 qui concerne le problème du sevrage des porcelets, propose de substituer, au cours d'une phase d'alimentation transitoire se situant entre la phase d'alimentation en lait maternel de la truie et la phase ultime d'alimentation en aliment sec, et afin d'anticiper autant que possible cette dernière, de substituer au lait de la truie des produits essentiellement à base de maïs naturel ou traité.

Il est connu que, pour satisfaire à son « besoin d'entretien » qui est proportionnel au poids métabolique de l'animal, lui-même fonction de son « poids vif », l'animal doit trouver, dans sa ration alimentaire, les éléments assurant, d'une part, la reconstitution de son propre poids, résultant d'une dégradation et d'une régénérescence normale de son organisme, et d'autre part, un apport d'énergie nécessaire à son activité normale; (plus particulièrement: respiratoire, physique, digestive, etc....), cette énergie, exprimée en calories, provenant, soit des nutriments de base ingérés, soit de la mobilisation et du catabolisme des nutriments antérieurement fixés.

On sait que ces nutriments sont:
- des lipides; à savoir: tout acide gras, court ou long, d'origine animale telle que suif, saindoux, etc... ou végétale telle que copra, huile de palme, etc....,
- des glucides; à savoir: tout sucre, rapide ou lent, tel qu'entre autres glucose, saccharose, amidons, etc..., et
- des protéines; à savoir: toute protéine, entre autres végétales, laitières, etc.....

Il est connu que pour répondre, de plus, à l'augmentation de son « poids vif », l'animal doit trouver dans sa ration alimentaire les éléments assurant, non seulement la formation de son augmentation de « poids vif », (dit « énergie fixée »), mais encore l'apport d'énergie nécessaire à la production de ce « poids vif » (dit « énergie de fixation »).

A cet égard, il est connu que « l'énergie de fixation » représente 40 à 50% de « l'énergie fixée ».

De même, l'énergie nécessaire à la digestion correspond, en général, à plusieurs dizaines de pour cent de « l'énergie d'entretien »; à savoir: de l'ordre de 20 à 30%, pour le veau de boucherie.

Lesdites « énergie d'entretien » et/ou « énergie de fixation » proviennent, soit d'un, de deux ou de trois desdits nutriments, ingérés par l'animal lors de ses repas, soit de la mobilisation et du catabolisme des nutriments antérieurement fixés; à savoir lipides et protéines.

Il est connu que l'augmentation journalière maximum possible de « poids vif » est fonction,
- d'une part, non seulement de la ration ingérée, - donc limité par la capacité d'ingestion de l'animal, laquelle croît avec l'âge et « le poids vif » -, mais encore de la composition de la ration en nutriments et de leurs proportions, et
- d'autre part, du potentiel de l'animal, lié à la qualité et à la race dudit animal.

A cet égard, il est connu, en ce qui concerne l'augmentation de « poids vif » désiré, que cette augmentation est fonction de la quantité de protéines supplémentaires, fixées par l'animal, ainsi que de celle de lipides, étant précisé que, non seulement, ladite quantité de protéines nécessaires, est directement proportionnelle à celle de « poids vif » recherché, mais encore, la quantité de lipides fixés, dans le cadre d'une ration correctement équilibrée, est d'une part, proportionnelle à celle de « poids vif » recherché, et d'autre part, croît en fonction du poids de l'animal lui-même, ainsi qu'en fonction de la valeur calorique de la ration ingérée.

Il est également connu, à ce sujet, que tout excédent de nutriment fixable, notamment les protéines, est transformé en énergie, et tout excédent d'énergie apporté est transformé en lipides fixés, mobilisable en tout ou partie et à tout moment par l'animal, notamment pour satisfaire ses besoins en « énergie d'entretien ». Par contre, l'apport de protéines est indispensable et doit être au moins égal à la quantité de protéines fixées, nécessaire à l'augmentation du « poids vif ».

Le document WO 93/22.936 décrit un complément nutritionnel destiné à des rations alimentaires régulièrement fournies à des ruminants, l'enseignement essentiel de ce document étant que le complément nutritionnel est formé de deux constituants, à savoir des protéines et des lipides, qui sont tous deux protégés contre la dégradation dans le rumen de l'animal.

Or il est connu que la valeur calorique des lipides, donnée généralement pour 9,4 calories par gramme de lipide, est supérieure à la valeur calorique des protéines, donnée généralement pour 5,65 calories par gramme de protéine, elle même supérieure à la valeur calorique des glucides, donnée généralement pour 4,1 calories par gramme de glucide.

Du point de vue économique, il y a donc lieu de noter que le coût unitaire des calories provenant des glucides, ainsi absorbées par l'animal monogastrique, est pratiquement le double de celui provenant des lipides et le quart de celui provenant des protéines.

Il est aussi connu qu'en alimentation équilibrée de bétail, entre autres pour les animaux monogastriques, on apporte normalement à l'animal de l'ordre de deux rations par jour, constituées par un ou des aliments qui comprennent, outre des minéraux, des vitamines et de l'eau, trois nutriments de base; à savoir: protéines, lipides et glucides.

Il est enfin connu voir par exemple Database WPI, Section Ch. Week 8635, Derwent Publication Ltd XP002032648 Class C 03, AN 86-231601 & SU-A-1 207 456 que l'alimentation du bétail, destiné à la boucherie et non arrivé à l'âge adulte, est normalement assurée par apport audit bétail de rations, en quantités pratiquement croissantes dans le temps, qui sont constituées d'un aliment composé, outre de minéraux, de vitamines et d'eau, des trois nutriments de base, protéines, lipides et glucides, dans des quantités prédéterminées, étant précisé que ces quantités restent alors pratiquement constantes au cours de périodes relativement longues et, qu'en conséquence, le nombre et la nature des calories, apportées par kilo de ration, sont eux-mêmes constants.

A cet égard, il est également connu que la ration peut être constituée par le mélange de deux aliments, dont la proportion au sein du mélange est généralement fixe et parfois évolutive dans le temps. L'utilisation dans ce cas, de ces deux aliments, trouve son origine dans la réglementation européenne qui a mis en place la « Prime de dénaturation » conformément au règlement communautaire 1725/79. Cette réglementation a, en fait, pour objet, de gérer l'utilisation, dans la fabrication des aliments d'allaitement, des quantités de poudre de lait fabriquées en Europe. La Commission Européenne détermine ainsi un taux minimum de poudre de lait à incorporer dans les aliments d'allaitement et, sous cette condition, accorde une aide (dite: « prime de dénaturation ») qui compense le prix élevé de cette matière première. La Commission peut modifier, en fonction de la conjoncture, soit le taux minimum d'incorporation de la poudre de lait dans les aliments d'allaitement, soit le montant de la « prime de dénaturation ». Cette disposition a conduit les fabricants et les utilisateurs d'aliments d'allaitement, à fabriquer et utiliser deux aliments, l'un avec poudre de lait, communément appelé « aliment avec lait », contenant au moins le taux minimum donnant droit à la « prime de dénaturation », et l'autre sans poudre de lait, communément appelé «aliment sans lait ». Les éleveurs, soit sur recommandations des fabricants, soit sous leur propre appréciation - mais uniquement, soit pour des raisons de coût de la ration, soit pour la recherche d'un taux de poudre de lait voulu -, sont amenés à mélanger et à utiliser, simultanément, ces deux aliments, avec lait et sans lait. Cette utilisation de deux aliments n'est motivée que par les raisons énoncées ci-dessus, et, non pour des motifs d'équilibre nutritionnel.

Etant donné, comme précisé plus haut, que:
- le besoin d'énergie, pour satisfaire le « besoin d'entretien » d'un animal, est proportionnel à son poids métabolique, lui-même fonction de son « poids vif », lequel évolue chaque jour,
- les besoins « d'énergie fixée et de fixation », nécessaires à l'augmentation du « poids vif » sont, d'une part, pour les protéines fixées, proportionnels à l'augmentation dudit « poids vif », pour les lipides fixés, à la fois fonction du poids de l'animal et proportionnel à l'augmentation dudit « poids vif » et fonction des calories apportées, et d'autre part, pour « l'énergie de fixation » directement proportionnel à la totalité de « l'énergie fixée », et
- les proportions entre les trois nutriments constitutifs des aliments d'une ration sont pratiquement constantes au cours de périodes relativement longues voire durant la totalité de la période d'élevage,
- il en ressort que, pour obtenir une même augmentation du « poids vif » d'un animal, il faut apporter à celui-ci une quantité de ration, d'autant plus importante que, son « poids vif » est lui-même important.

L'art antérieur, consistant à distribuer, à l'animal des rations, en quantités pratiquement croissantes dans le temps, constituées d'un aliment composé, outre de minéraux, de vitamines et d'eau, des trois nutriments de base protéines, lipides et glucides, dans des quantités prédéterminées, lesdites quantités restant pratiquement constantes au cours de périodes relativement longues - et, en conséquence, le nombre et la nature des calories, apportées par kilo de ration, étant eux-mêmes constants, - cela conduit obligatoirement, en permanence et à de rares exceptions près, soit à un déficit, soit à un excédent de distribution et de consommation, d'un, de deux et/ou desdits trois nutriments de base, par rapport aux besoins réels totaux de l'animal.

Le besoin total de l'animal, correspondant à la somme du besoin d'entretien et du besoin de croissance, ce dernier étant lié à l'augmentation de poids vif recherché, un déficit en protéine limitera l'augmentation du « poids vif » recherché, et un excédent de protéines générera des calories à un coût unitaire trop élevé, comme vu plus haut.

Contrairement à cet art antérieur, le procédé, objet de la présente invention, permet de satisfaire régulièrement les besoins de l'animal, nécessaires, tant à son « énergie d'entretien » qu'à ses besoins de croissance, - ces derniers, pour une augmentation de « poids vif » déterminé -, en ajustant, la ration distribuée à l'animal, tant sur le plan quantitatif (à savoir: le volume de la ration), que sur le plan qualitatif (à savoir: d'une part, la proportion de chacun des trois nutriments dans la ration et, d'autre part, l'optimisation du coût de la ration); ce qui supprime en fait quasiment les inconvénients de cet art antérieur, rappelé plus haut.

La présente invention a pour objet le procédé de la revendication 1. D'autres caractéristiques additionnelles font l'objet de la revendication 2.

Le procédé, selon l'invention, se caractérise en ce qu'on apporte au bétail pratiquement quotidiennement, une ration prédéterminée, permettant de satisfaire les besoins quotidiens, nécessaires tant en « énergie d'entretien », qu'en « besoins de croissance », ladite ration quotidienne étant substantiellement constituée d'au moins trois aliments, utilisés simultanément, en proportions différentes et prédéterminées, chacun desdits aliments étant constitué, outre de minéraux, de vitamines et d'eau, des trois nutriments de base, protéines, lipides et glucides, eux-mêmes dans des proportions prédéterminées et différentes, dont l'un desdits trois aliments résulte du règlement 1725/70 rappelé plus haut.

Selon l'invention, on apporte pratiquement quotidiennement au bétail, une ration prédéterminée, sensiblement croissante dans le temps.

Selon l'invention, la quantité desdits aliments contenus dans ladite ration, est pratiquement définie en fonction du montant d'énergie d'entretien de l'animal, qui est fonction de son « poids vif » et en fonction du gain de « poids vif » recherché; ce dernier est, selon une forme préférentielle de l'invention, prévu quotidiennement et défini pour la durée totale de l'élevage.

Selon l'invention, chacun desdits aliments étant constitué, outre des minéraux, de vitamines et d'eau, des trois nutriments de base, protéines, lipides et glucides, eux-mêmes dans des proportions prédéterminées et différentes, ces proportions sont pratiquement définies en fonction du montant d'énergie « d'entretien de l'animal », qui est fonction de son « poids vif », et en fonction du gain de « poids vif » de l'animal recherché.

Selon une forme de réalisation de l'invention, ladite ration est constituée de quatre aliments, en proportions prédéterminées et différentes, dont l'un résulte, ainsi que précisé plus haut, du Règlement Communautaire 1725/79.

Selon une autre forme de réalisation de l'invention, ladite ration est constituée de quatre aliments, non compris celui résultant du règlement 1725/79, dont deux contiennent des acides gras longs et courts, dans des proportions différentes.

Les deux tableaux ci-après présentent, à titre illustratif et non limitatif de l'invention, deux formes de mise en oeuvre de celle-ci, pour l'alimentation de veaux destinés à la boucherie, en comparaison avec l'art antérieur.

Le tableau 1, ci-dessous, comparant une alimentation de veaux destinés à la boucherie, selon l'art antérieur, avec deux formes d'alimentation selon l'invention, montre l'évolution de l'indice du taux de chacun des trois nutriments, dans les trois rations, avec pour chaque ration et par nutriment:
→ Taux moyen de la ration totale,
→ Taux à 12 semaines,
→ Taux à la fin de l'élevage,
le taux moyen, de chaque nutriment, de la ration totale de l'art antérieur, étant pris comme base 100 des indices.

| TABLEAU 1 | NUTRIMENT A1 | NUTRIMENT A2 | NUTRIMENT A3 |
|---|---|---|---|
| Art antérieur | | | |
| Taux moyen de la ration totale | 1,0 | 1,0 | 1,0 |
| Taux à 80 jours | 1,0 | 1,0 | 1,0 |
| Taux le dernier jour d'élevage | 1,0 | 1,0 | 1,0 |
| Invention 1° forme | | | |
| Taux moyen de la ration tolale | 0,91 | 0,91 | 1,08 |
| Taux à 80 jours | 0,88 | 0,88 | 1,11 |
| Taux le dernier jour d'élevage | 0,86 | 0,86 | 1,14 |
| Invention 2° forme | | | |
| Taux moyen de la ration totale | 0,84 | 0,84 | 1,28 |
| Taux à 80 jours | 0,87 | 0,87 | 1,13 |
| Taux le dernier jour d'élevage | 0,70 | 0,70 | 1,31 |

Le Tableau 2, ci-dessous, montre dans le cadre de la comparaison, selon le Tableau 1, et pour la durée totale de l'élevage
- le coût des rations, avec base 100 pour l'art ancien,
- les poids vifs, en kg, obtenus à la fin de la période d'élevage,
- le niveau du pourcentage de chacun des trois nutriments dans les trois rations, avec base 100 pour l'art antérieur.

| TABBLEAU 2 | COUT RATION | POIDS VIF EN KG | TOTAL NUTRIMENT | DONT NUTRIMENT A1 | DONT NUTRIMENT A2 | DONT NUTRIMENT A3 |
|---|---|---|---|---|---|---|
| | EXPRIME EN INDICE | EN KG | EN % | EN INDICE | EN INDICE | EN INDICE |
| Art Antérieur | 100 | 209,26 | *100* | 1 | 1 | 1 |
| Invention 1° forme | 97,7 | 213,22 | *100* | 0,91 | 0,91 | 1,08 |
| Invention 2° forme | 101,8 | 218,09 | *100* | 0,84 | 0,84 | 1,28 |

Dans les exemples ci-après, référencés n°1 et 1 bis et n° 2 et 2 bis, sont donnés à titre comparatifs des processus d'alimentation de veaux identiques de race FFPN (Français Frison Pie Noire).

Aux exemples 1 et 1 bis, on compare deux veaux identiques, alimentés (ex:1) conformément au processus de l'art antérieur et (ex: 1 bis) selon le processus objet de l'invention. Dans l'exemple 1: les variations de poids entre les aliments (protéines, lipides, glucides) sont effectuées selon des paliers correspondant à des périodes de l'ordre de 3 à 5 jours; par contre, dans l'exemple 1 bis, les variations de poids de ces aliments sont effectuées de façon sensiblement linéaire au cours de chaque semaine. Comme on le voit, le gain de poids du veau alimenté selon le processus de l'invention, par rapport à celui alimenté selon l'art antérieur est de l'ordre de 17%; cela au cours d'une période de 68 jours.

Aux exemples 2 et 2 bis, on compare deux lots de 45 veaux identiques, alimentés (ex: 2) conformément au processus de l'art antérieur (ex: 2 bis) selon le processus objet de l'invention. Dans l'exemple 2: les variations de poids entre les aliments (protéines, lipides, glucides) sont effectuées selon des paliers correspondant à des périodes de l'ordre de 3 à 5 jours; par contre, dans l'exemple 2 bis, les variations de poids de ces aliments sont effectuées de façon sensiblement linéaire au cours de chaque semaine. Comme on le voit, le gain de poids moyen des veaux alimentés selon le processus de l'invention, par rapport à ceux alimentés selon l'art antérieur est de l'ordre de 7,5%; cela au cours d'une période de 68 jours. Ce plus faible gain de poids moyen, comparé à celui des exemples 1 et 1 bis, résulte de la présence, dans ce lot de 45 veaux, de 3 veaux ayant présenté des difficultés d'alimentation, bien connues de l'homme du métier.

### Exemple n ° 1

| Ages (jours) | Poids fin période (kg) | Gain poids (kg) | Protéines totale (kg) | Lipides totaux (kg) | Glucides totaux (kg) |
|---|---|---|---|---|---|
| 0-77 | 130 | 71.0 | 18.57 | 20.03 | 43.53 |
| 77-92 | 149.5 | 19.5 | 6.06 | 6.96 | 15.48 |
| 92-99 | 159.5 | 10.0 | 3.05 | 3.50 | 7.78 |
| 99-106 | 168 | 8.5 | 3.21 | 3.67 | 8.17 |
| 106-113 | 180 | 12.0 | 3.35 | 3.84 | 8.53 |
| 113-120 | 189 | 9.0 | 3.47 | 3.97 | 8.83 |
| 120-127 | 200.5 | 11.5 | 3.58 | 4.10 | 9.11 |
| 127-134 | 211 | 10.5 | 3.67 | 4.21 | 9.36 |
| 134-141 | 222.5 | 11.5 | 3.74 | 4.27 | 9.49 |
| 141-145 | 225.5 | 3.0 | 2.16 | 2.47 | 5.48 |
| total | | 166.5 | 50.86 | 57.03 | 125.76 |

### Exemple n ° 1 Bis

| Ages (jours) | Poids fin période (kg) | Gain poids (kg) | Protéines totale (kg) | Lipides totaux (kg) | Glucides totaux (kg) |
|---|---|---|---|---|---|
| 0.77 | 131.5 | 81.2 | 18.57 | 20.03 | 43.53 |
| 77-92 | 155 | 23.5 | 6.06 | 6.96 | 16.94 |
| 92-99 | 167.5 | 12.5 | 3.05 | 3.50 | 8.96 |
| 99-106 | 180 | 12.5 | 3.21 | 3.67 | 9.41 |
| 106-113 | 192 | 12.0 | 3.35 | 3.84 | 10.24 |
| 113-120 | 205 | 130 | 3.47 | 3.97 | 11.00 |
| 120-127 | 219 | 14.0 | 3.58 | 4.10 | 11.47 |
| 127-134 | 232 | 13.0 | 3.67 | 4.21 | 12.28 |
| 134-141 | 243.5 | 11.5 | 3.74 | 4.27 | 13.40 |
| 141-145 | 245.5 | 2.0 | 2.16 | 2.47 | 8.17 |
| total | | 195.21 | 50.86 | 54.57 | 145.41 |

### Exemple n ° 2

| Ages (jours) | Poids fin période (kg) | Gain poids (kg) | Protéines totale (kg) | Lipides totaux (kg) | Glucides totaux (kg) |
|---|---|---|---|---|---|
| 0-77 | 119.87 | 69.1 | 18.57 | 20.03 | 43.53 |
| 77-92 | 138.27 | 18.6 | 6.06 | 6.96 | 15.48 |
| 92-99 | 148.3 | 10.0 | 3.05 | 3.50 | 7.78 |
| 99-106 | 158.48 | 10.2 | 3.21 | 3.67 | 8.17 |
| 106-113 | 168.42 | 9.9 | 3.35 | 3.84 | 8.53 |
| 113-120 | 179.07 | 10.7 | 3.47 | 3.97 | 8.83 |
| 120-127 | 189.03 | 10.0 | 3.58 | 4.10 | 9.11 |
| 127-134 | 199.5 | 10.5 | 3.87 | 4.21 | 9.36 |
| 134-141 | 208.74 | 9.2 | 3.74 | 4.27 | 9.49 |
| 141-145 | 209.44 | 0.7 | 2.16 | 2.47 | 5.48 |
| total | | 158.9 | 50.86 | 57.03 | 125.76 |

### Exemple n ° 2 Bis

| Ages (jours) | Poids fin période (kg) | Gain poids (kg) | Protéines totate (kg) | Lipides totaux (kg) | Glucides totaux (kg) |
|---|---|---|---|---|---|
| 0.77 | 120.08 | 69.2 | 18.57 | 20.03 | 43.53 |
| 77-92 | 140.98 | 20.9 | 6.06 | 6.96 | 16.94 |
| 92-99 | 152.03 | 11.1 | 3.05 | 3.50 | 8.96 |
| 99-106 | 162.81 | 10.8 | 3.21 | 3.67 | 9.41 |
| 106-113 | 174.2 | 11.4 | 3.35 | 3.84 | 10.24 |
| 113-120 | 185.69 | 11.5 | 3.47 | 3.97 | 11.00 |
| 120-127 | 187.22 | 11.5 | 3.58 | 4.10 | 11.47 |
| 127-134 | 208.9 | 11.7 | 3.67 | 4.21 | 12.28 |
| 134-141 | 219.94 | 11.0 | 3.74 | 4.27 | 13.40 |
| 141-145 | 221.79 | 1.8 | 2.16 | 2.47 | 8.17 |
| total | | 170.92 | 50.86 | 54.57 | 145.41 |

## Revendications

1. Procédé d'alimentation équilibrée du bétail consistant à apporter au bétail pratiquement quotidiennement une ration en quantité pratiquement croissante dans le temps et permettant de satisfaire les besoins quotidiens, dans lequel ladite ration quotidienne est substantiellement constituée d'au moins trois aliments, utilisés simultanément, en proportions différentes et prédéterminées, chacun desdits aliments étant constitué, outre de minéraux, de vitamines et d'eau, des trois nutriments de base, protéines, lipides et glucides, eux-mêmes dans des proportions prédéterminées et différentes, les proportions des trois aliments étant fonction du « poids vif » de l'animal et du gain de « poids vif » recherché, la quantité desdits aliments contenus dans ladite ration étant pratiquement définie en fonction du montant d'énergie d'entretien de l'animal, qui est fonction de son « poids vif », et le gain de « poids vif » recherché étant quotidiennement défini pour la durée totale de l'élevage.

2. Procédé selon la revendication 1 caractérisé en ce que ladite ration est constituée de quatre aliments, en proportions prédéterminées et différentes, dont deux contiennent, dans des proportions différentes, des acides gras longs et courts.

## Claims

1. A method for a balanced feeding of cattle which consists of bringing practically daily a food intake in a practically increasing amount with time and permitting to satisfy daily needs, wherein said daily food intake is substantially composed of at least three food components, used simultaneously, in different and predetermined ratios, each of said food components being composed of vitamins and water, of the three basic nutriments, proteins, lipids and carbohydrate, themselves in different and predetermined ratios, in addition to minerals, the ratios of said three food components depending on the weight of the living animal and on the expected weight increase, the amount of said food components contained in said food intake being practically defined in function of the amount of the energy required for the maintenance of the animal, which energy required for the maintenance depends on the living animal weight, and the expected increase in weight of the living animal being defined daily during the whole rearing time period.

2. The method according to claim 1, characterised in that said food intake is composed of four food components, in predetermined and different ratios, wherein two of them contain, in different ratios, long and short fatty acids.

## Patentansprüche

1. Verfahren zum ausgeglichenen Ernähren von Großvieh, das darin besteht, daß dem Großvieh praktisch täglich eine Nahrungsmittelration gegeben wird, deren Menge mit der Zeit praktisch größer wird und erlaubt, dem täglichen Bedarf gerecht zu werden, und bei dem die tägliche Ration im wesentlichen aus wenigstens drei Nährstoffen besteht, die in unterschiedlichen und vorbestimmten Proportionen gleichzeitig verfüttert werden, wobei jeder dieser Nährstoffe außer aus Mineralstoffen, Vitaminen und Wasser aus den drei Grundnährstoffen, den Proteinen, den Fetten und den Kohlehydraten, die ihrerseits wiederum in unterschiedlichen und vorbestimmten Proportionen vorliegen, besteht, wobei die Proportionen der drei Nährstoffe vom « Lebendgewicht » des Tiers und von der gewünschten Zunahme des « Lebendgewichts » abhängen, wobei die Menge der in der Ration enthaltenen Nährstoffe praktisch in Abhängigkeit vom Betrag des Energiehaushalts des Tiers, der von dessen « Lebendgewicht » abhängt, bestimmt wird, und die gewünschte Zunahme des « Lebendgewichts » während der gesamten Zuchtdauer täglich bestimmt wird.

2. Verfahren nach Anspruch 1, dadurch gekennzeichnet, daß die Ration aus vier Nährstoffen in vorbestimmten und verschiedenen Proportionen besteht, von denen zwei Nährstoffe lange und kurze Fettsäuren in unterschiedlichen Proportionen enthalten.
